# EUROPEAN PATENT APPLICATION

(11) **EP 4 007 130 A1**
(43) Date of publication of application: **01.06.2022**
(21) Application number: 19939610.2
(22) Date of filing: 26.07.2019
(51) Int. Cl.: H02K 5/08

(54) **ELECTRIC MOTOR, FAN, AIR CONDITIONING DEVICE, AND METHOD FOR MANUFACTURING ELECTRIC MOTOR**

(71) Applicant: MITSUBISHI ELECTRIC CORPORATION, Chiyoda-ku Tokyo 100-8310 (JP)
(72) Inventor: ASO Hiroki, Tokyo 100-8310 (JP); TAKAHASHI Ryogo, Tokyo 100-8310 (JP)
(74) Representative: Pfenning, Meinig & Partner mbB
(86) International application number: PCT/JP2019/029332
(87) International publication number: WO 2021/019592

(57) **Abstract**

A motor includes a rotor having a rotation shaft, a rotor core fixed with respect to the rotation shaft, a magnet attached to the rotor core, and a bearing attached to the rotation shaft. The magnet constitutes a first magnetic pole, and a part of the rotor core constitutes a second magnetic pole. The motor also includes an annular stator surrounding the rotor from outside in a radial direction about a center axis of the rotation shaft, a bearing holding member holding the bearing, and a resin portion covering the stator and the bearing holding member.

## Description

### TECHNICAL FIELD

The present invention relates to a motor, a fan, an air conditioner, and a manufacturing method of the motor.

### BACKGROUND ART

Conventionally, a motor having a stator covered with a mold resin is known (see, for example, Patent Reference 1).

### PRIOR ART REFERENCE

### PATENT REFERENCE

[PATENT REFERENCE 1]
International Publication WO 2017/183162 (see FIG. 1)

### SUMMARY OF THE INVENTION

### PROBLEM TO BE SOLVED BY THE INVENTION

Recently, with an increasing output of the motor, reduction in vibration and noise of the motor is required.

The present invention is intended to solve the above-described problem, and an object of the present invention is to reduce vibration and noise of a motor.

### MEANS OF SOLVING THE PROBLEM

A motor according to an aspect of the present invention includes a rotor that has a rotation shaft, a rotor core fixed with respect to the rotation shaft, a magnet attached to the rotor core, and a bearing attached to the rotation shaft. The magnet constitutes a first magnetic pole, and a part of the rotor core constitutes a second magnetic pole. The motor also includes an annular stator surrounding the rotor from outside in a radial direction about a center axis of the rotation shaft, a bearing holding member holding the bearing, and a resin portion covering the stator and the bearing holding member.

### EFFECTS OF THE INVENTION

According to the present invention, the bearing is held by the bearing holding member, and the bearing holding member and the stator are covered with the resin portion. Thus, the coaxiality between the stator and the rotor can be improved. Accordingly, vibration and noise of the motor can be reduced.

### BRIEF DESCRIPTION OF DRAWINGS

FIG. 1 is a partial sectional view illustrating a motor of a first embodiment.
FIG. 2 is a sectional view illustrating a rotor of the first embodiment.
FIG. 3 is a sectional view illustrating a stator core of the first embodiment.
FIGS. 4(A) and 4(B) are a plan view and a side view illustrating a stator of the first embodiment, respectively.
FIG. 5 is an enlarged sectional view illustrating a part of the motor of the first embodiment.
FIGS. 6(A), 6(B), and 6(C) are a front view, a sectional view, and a rear view illustrating a bearing holding member of the first embodiment, respectively.
FIG. 7 is a diagram illustrating a mold stator of the first embodiment as viewed from an opening side.
FIG. 8 is a sectional view illustrating a mold used in a manufacturing process of the motor of the first embodiment.
FIG. 9 is a flowchart illustrating the manufacturing process of the motor of the first embodiment.
FIG. 10 is an enlarged diagram illustrating a part of a bearing holding member of a modification.
FIG. 11 is an enlarged sectional view illustrating a part of a motor of a second embodiment.
FIG. 12 is a diagram illustrating a mold stator of the second embodiment as viewed from an opening side.
FIG. 13(A) is an enlarged sectional view illustrating a part of a motor of a third embodiment, and FIG. 13(B) is a perspective view illustrating a contact portion of the third embodiment.
FIG. 14 is an enlarged sectional view illustrating a part of a motor of a fourth embodiment.
FIG. 15(A) is an enlarged sectional view illustrating a part of a motor of a fifth embodiment, and FIG. 15(B) is a perspective view illustrating a bearing holding member of the fifth embodiment.
FIG. 16 is a sectional view illustrating a rotor of a modification.
FIG. 17(A) is a diagram illustrating an air conditioner to which the motor of each embodiment is applicable, and FIG. 17(B) is a sectional view illustrating an outdoor unit.

### MODE FOR CARRYING OUT THE INVENTION

Embodiments of the present invention will be described in detail below with reference to the figures. The present invention is not limited to these embodiments.

### FIRST EMBODIMENT

### (Configuration of Motor 1)

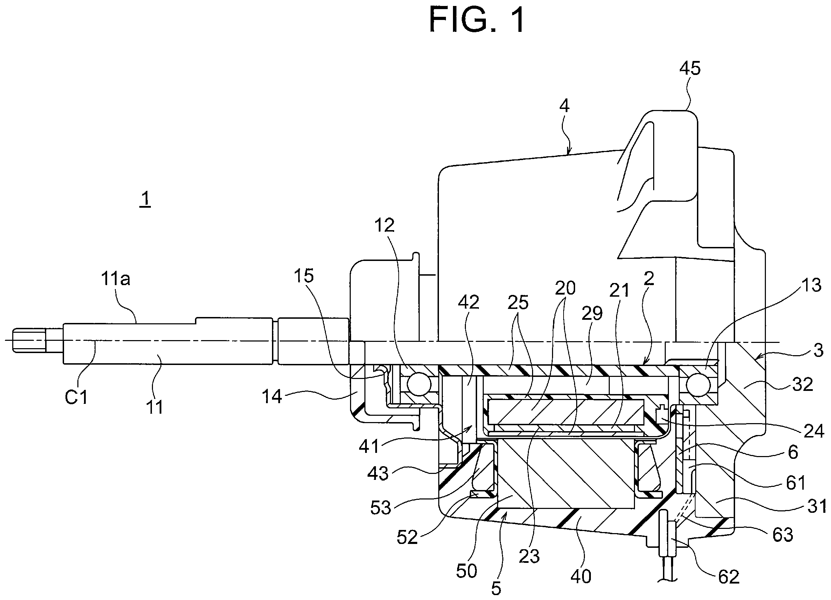

FIG. 1 is a partial sectional view illustrating a motor 1 of a first embodiment. The motor 1 is, for example, a brushless DC motor that is used in a fan of an air conditioner.

The motor 1 includes a rotor 2 having a rotation shaft 11 and a mold stator 4. The rotation shaft 11 is a shaft for rotation of the rotor 2. The mold stator 4 has an annular stator 5 surrounding the rotor 2, a circuit board 6, a bearing holding member 3, and a mold resin portion 40 as a resin portion that covers these components.

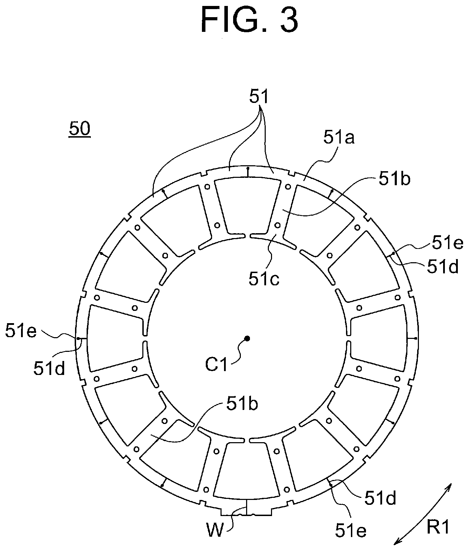

In the description below, a direction of an axis C1, which is a center axis of the rotation shaft 11, is referred to as an "axial direction". A circumferential direction (indicated by an arrow R1 in FIG. 3 and other figures) about the axis C1 of the rotation shaft 11 is referred to as a "circumferential direction". A radial direction about the axis C1 of the rotation shaft 11 is referred to as a "radial direction".

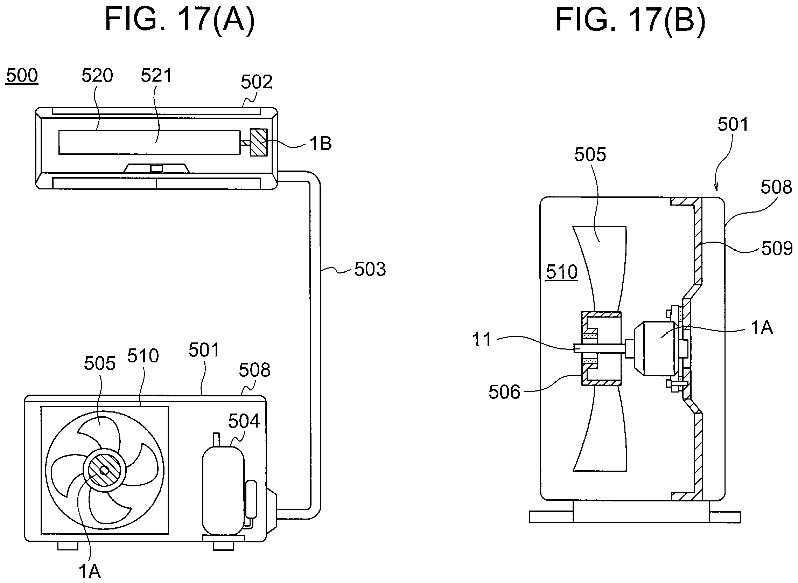

The rotation shaft 11 protrudes from the mold stator 4 to the left in FIG. 1. For example, an impeller 505 of a fan (FIG. 17(A)) is attached to an attachment portion 11a formed at the protruding portion of the rotation shaft 11. Thus, the protruding side (the left side in FIG. 1) of the rotation shaft 11 is referred to as a "load side", while the opposite side (the right side in FIG. 1) of the rotation shaft 11 is referred to as a "counter-load side".

### (Configuration of Rotor 2)

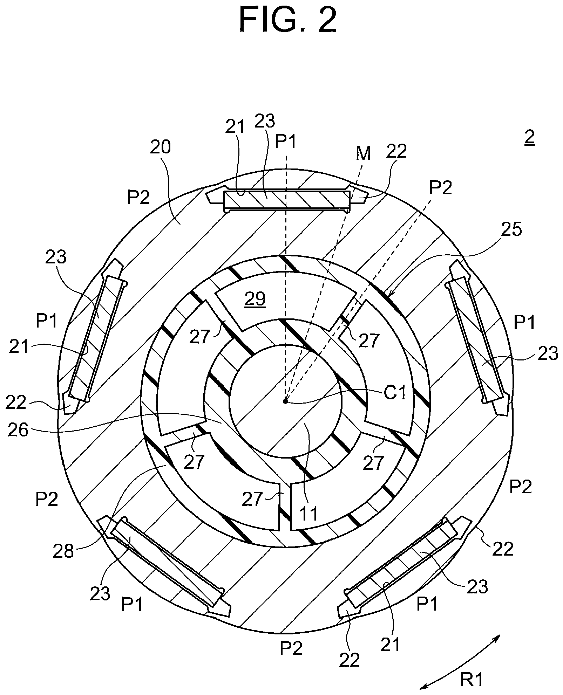

FIG. 2 is a sectional view illustrating the rotor 2. As illustrated in FIG. 2, the rotor 2 has the rotation shaft 11, a rotor core 20 fixed with respect to the rotation shaft 11, a plurality of magnets 23 embedded in the rotor core 20, and a resin portion 25 provided between the rotation shaft 11 and the rotor core 20. The number of magnets 23 is five in this example. The magnet 23 is also referred to as a main magnet.

The rotor core 20 is a member having an annular shape about the axis C1. An inner circumference of the rotor core 20 faces the rotation shaft 11 with a space therebetween. The rotor core 20 is formed of a plurality of stacking elements that are stacked in the axial direction and integrally fixed by crimping, welding, bonding, or the like. The stacking elements are, for example, electromagnetic steel sheets. Each stacking element has a thickness of 0.1 mm to 0.7 mm.

The rotor core 20 has a plurality of magnet insertion holes 21 in the circumferential direction. The magnet insertion holes 21 are arranged at equal intervals in the circumferential direction and disposed at equal distances from the axis C1. The number of magnet insertion holes 21 is five in this example. The magnet insertion holes 21 are formed along an outer circumference of the rotor core 20 and pass through the rotor core 20 in the axial direction.

The magnet 23 is inserted in each magnet insertion hole 21. The magnet 23 is a rare earth magnet that contains samarium (Sm), iron (Fe), and nitrogen (N) . Alternatively, the magnet 23 may be a rare earth magnet that contains neodymium (Nd), iron, and boron (B) . These rare earth magnets are characterized by large magnetic force. The magnet 23 is in the form of a flat plate, and has a rectangular shape in a cross section perpendicular to the axial direction in this example. The shape of the magnet 23 is not limited to such a shape, but may be other shapes.

Five magnets 23 are arranged so that the same magnetic poles face the outer circumferential side of the rotor core 20. In a region of the rotor core 20 between the magnets 23 adjacent in the circumferential direction, a magnetic pole opposite to those of the magnets 23 is formed.

Thus, five first magnetic poles P1 and five second magnetic poles P2 are alternately arranged in the circumferential direction in the rotor 2. Each first magnetic pole P1 is formed by the magnet 23, while each second magnetic pole P2 is formed by a portion of the rotor core 20. The first magnetic pole P1 is also referred to as a magnet magnetic pole, while the second magnetic pole P2 is also referred to as a virtual magnetic pole. Such a rotor 2 is called a consequent pole rotor.

Hereinafter, the term "magnetic poles" denotes both the first magnetic poles P1 and the second magnetic poles P2. The number of poles of the rotor 2 is 10. The magnetic poles P1 and P2 of the rotor 2 are arranged at equal angular intervals in the circumferential direction with a pole pitch of 36 degrees (360 degrees/10) . A boundary between the first magnet pole P1 and the second magnetic pole P2 is defined as a pole boundary M.

The outer circumference of the rotor core 20 has a so-called flower shape in a cross section perpendicular to the axial direction. In other words, the outer circumference of the rotor core 20 has its maximum outer diameter at a pole center of each of the magnetic poles P1 and P2 and its minimum outer diameter at the pole boundary M, and extends in an arc shape from the pole center to the pole boundary M. The outer circumference of the rotor core 20 is not limited to the flower shape, but may be a circular shape. The inner circumference of the rotor core 20 has a circular shape in a cross section perpendicular to the axial direction.

In the consequent pole rotor 2, the number of magnets 23 can be halved as compared with a non-consequent pole rotor having the same number of poles. Since the number of the expensive magnets 23 is small, the manufacturing cost of the rotor 2 is reduced.

Although the number of poles of the rotor 2 is 10 in this example, it is sufficient that the number of poles of the rotor 2 is an even number of four or more. Moreover, although one magnet 23 is disposed in each magnet insertion hole 21 in this example, two or more magnets 23 may be disposed in each magnet insertion hole 21.

The magnet insertion hole 21 extends linearly in a direction perpendicular to a straight line extending in the radial direction and passing through a center of the magnetic insertion hole 21 in the circumferential direction, i.e., the pole center. An opening (flux barrier) 22 for suppressing a leakage magnetic flux between the adjacent magnetic poles is formed at each of both sides of the magnet insertion hole 21 in the circumferential direction. The magnet insertion hole 21 may have a V shape such that its center in the circumferential direction protrudes toward the axis C1 side.

The resin portion 25 is provided between the rotation shaft 11 and the rotor core 20. The resin portion 25 holds the rotation shaft 11 and the rotor core 20 in such a manner that the rotation shaft 11 and the rotor core 20 are apart from each other. The resin portion 25 is desirably composed of a thermoplastic resin such as polybutylene terephthalate (PBT).

The resin portion 25 has an annular inner ring portion 26 that is fixed to an outer circumference of the rotation shaft 11, an annular outer ring portion 28 that is fixed to the inner circumference of the rotor core 20, and a plurality of ribs 27 that connect the inner ring portion 26 and the outer ring portion 28. The ribs 27 are arranged at equal intervals in the circumferential direction about the axis C1. The number of ribs 27 is, for example, half the number of poles, and is five in this example.

The rotation shaft 11 is fitted into an inner side of the inner ring portion 26 of the resin portion 25. The ribs 27 are arranged at equal intervals in the circumferential direction and radially extend outward in the radial direction from the inner ring portion 26. A hollow portion 29 is formed between the ribs 27 that are adjacent to each other in the circumferential direction. In this example, the number of ribs 27 is half the number of poles, and a position of each rib 27 in the circumferential direction is coincident with the pole center of the second magnetic pole P2, but the number and positions of the ribs 27 are not limited thereto.

As illustrated in FIG. 1, a sensor magnet 24 is disposed to face the rotor core 20 in the axial direction. The sensor magnet 24 is held by the resin portion 25. The sensor magnet 24 has magnetic poles, the number of which is the same as the number of poles of the rotor 2. A magnetic field of the sensor magnet 24 is detected by a magnetic sensor mounted on the circuit board 6, and thereby a position of the rotor 2 in the circumferential direction, i.e., a rotational position of the rotor 2 is detected.

The rotor 2 is not limited to the configuration in which the rotor core 20 and the rotation shaft 11 are connected by the resin portion 25 as described above. For example, the rotor 2 may have a central hole formed in the rotor core 20, and the rotation shaft 11 may be fitted into the central hole.

### (Configuration of Mold Stator 4)

The mold stator 4 includes the stator 5 and the mold resin portion 40 as described above. The stator 5 surrounds the rotor 2 from outside in the radial direction. The stator 5 includes a stator core 50, an insulating portion 52 provided on the stator core 50, and coils 53 wound on the stator core 50 via the insulating portion 52.

The mold resin portion 40 is desirably composed of a thermosetting resin such as a bulk molding compound (BMC). However, the mold resin portion 40 may be composed of a thermoplastic resin such as PBT or polyphenylene sulfide (PPS). The mold resin portion 40 has mounting legs 45 on its outer circumference. The mounting legs 45 are provided for mounting the motor 1 on a frame of an air conditioner or the like.

The mold resin portion 40 has a rotor housing portion 41 at its center in the radial direction, and the rotor 2 is housed in the rotor housing portion 41. An opening 42 is formed on the load side of the rotor housing portion 41. The rotor 2 is inserted into the rotor housing portion 41 through the opening 42.

At an end surface of the mold resin portion 40 on the load side, a step portion 43 is formed along a peripheral edge of the opening 42. A bracket 15 is attached to the step portion 43. The bracket 15 is composed of a metal such as a hot-dip zinc-aluminum-magnesium alloy-plated steel sheet. A bearing 12, which is one of the bearings that support the rotation shaft 11, is held by the bracket 15. A cap 14 for preventing the entry of water or the like is attached to the outside of the bracket 15.

The bearing holding member 3 that holds the other bearing 13 is provided on a side of the mold resin portion 40 opposite to the opening 42, i.e., on the counter-load side. A configuration of the bearing holding member 3 will be described later.

FIG. 3 is a plan view illustrating the stator core 50. The stator core 50 is formed of a plurality of stacking elements that are stacked in the axial direction and integrally fixed by crimping, welding, bonding, or the like. The stacking elements are, for example, electromagnetic steel sheets. Each stacking element has a thickness of 0.1 mm to 0.7 mm.

The stator core 50 has a yoke 51a extending annularly in the circumferential direction about the axis C1, and a plurality of teeth 51b extending inward in the radial direction from the yoke 51a. A tooth tip end 51c on an inner side of each tooth 51b in the radial direction faces the outer circumference of the rotor 2 (FIG. 1) . Although the number of teeth 51b is 12 in this example, the number of teeth 51b is not limited to 12.

The stator core 50 is formed of a plurality of core portions 51 each of which includes one tooth 51b and which are connected together. The core portions 51 are divided by split surface portions 51d formed in the yoke 51a. Each split surface portion 51d extends outward in the radial direction from an inner circumference of the yoke 51a. A thin-walled connection portion 51e, which is a plastically deformable thin-walled portion, is formed between an outer end of each split surface portion 51d and the outer circumference of the yoke 51a.

The thin-walled connection portion 51e is a connection portion that connects the core portions 51 adjacent to each other in the circumferential direction. That is, the stator core 50 has a configuration in which a plurality of core portions 51 are connected in the circumferential direction at the thin-walled connection portions 51e. The stator core 50 can be expanded into a strip shape by plastic deformation of the thin-walled connection portions 51e.

The coils 53 can be wound around the teeth 51b in a state where the stator core 50 are expanded in a strip shape. After the winding of the coils 53 is completed, the strip-shaped stator core 50 is bent in an annular shape, and both ends W of the stator core 50 are welded to each other. The connection portion that connects adjacent core portions 51 is not limited to the thin-walled connection portion 51e, but may be, for example, a crimping portion.

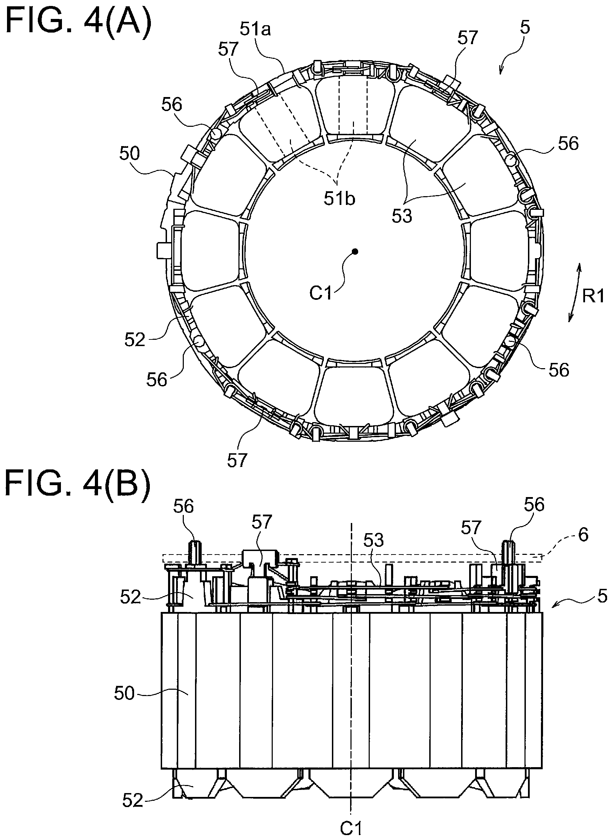

FIG. 4(A) is a plan view illustrating the stator 5. FIG. 4(B) is a side view illustrating the stator 5. In FIG. 4(A), two of the teeth 51b of the stator 5 are indicated by broken lines.

The coil 53 is, for example, a magnet wire, and is wound around the tooth 51b via the insulating portion 52. The insulating portion 52 is composed of a thermoplastic resin such as PBT, for example. The insulating portion 52 is formed by integrally molding the thermoplastic resin with the stator core 50 or by assembling a molded body of the thermoplastic resin to the stator core 50.

The insulating portion 52 has wall portions on inner and outer sides of the coils 53 in the radial direction, and the wall portions guide the coils 53 from both sides in the radial direction. A plurality of terminals 57 are mounted on the insulating portion 52. Ends of the coils 53 are connected to the terminals 57 by, for example, fusing (thermal caulking), soldering, or the like.

The insulating portion 52 is also provided with a plurality of protrusions 56 for fixing the circuit board 6. The protrusions 56 are inserted through attachment holes formed in the circuit board 6. The circuit board 6 is fixed to the stator 5 by thermally welding the tips of the protrusions 56 inserted through the attachment holes of the circuit board 6. A combination of the stator 5 and the circuit board 6 is referred to as a stator assembly.

As shown in FIG. 1, the circuit board 6 is disposed on one side of the stator 5 in the axial direction, i.e., the counter-load side of the stator 5 in this example. The circuit board 6 is a printed circuit board on which a drive circuit 61 such as a power transistor for driving the motor 1 is mounted, and lead wires 63 are wired on the circuit board 6. The lead wires 63 on the circuit board 6 are drawn to the outside of the motor 1 through a lead wire outlet component 62 attached to an outer circumferential portion of the mold resin portion 40.

### (Configuration of Bearing Holding Member 3)

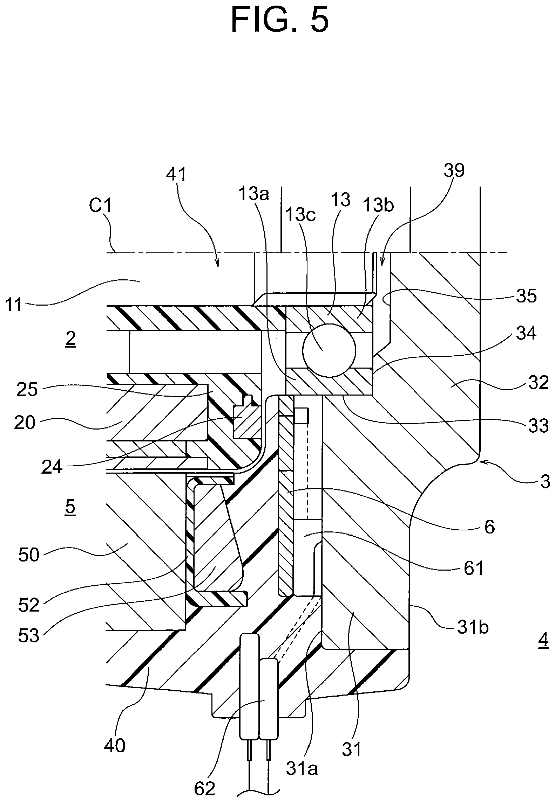

Next, the bearing holding member 3 will be described. FIG. 5 is an enlarged view illustrating a part of the motor 1. As illustrated in FIG. 5, the bearing 13 is a rolling bearing and has an outer ring 13a, an inner ring 13b, and rolling elements 13c. The inner ring 13b of the bearing 13 is attached to the rotation shaft 11 by interference fit. The outer ring 13a of the bearing 13 is attached to the bearing holding member 3 by clearance fit.

The bearing holding member 3 is composed of a metal. More specifically, the bearing holding member 3 is composed of a hot-dip zinc-aluminum-magnesium alloy-plated steel sheet. Since the hot-dip zinc-aluminum-magnesium alloy-plated steel sheet can be subjected to press-working, its workability is excellent and high dimensional accuracy can be easily obtained. In addition, the hot-dip zinc-aluminum-magnesium alloy-plated steel sheet has higher thermal conductivity as compared to a general resin such as BMC or PBT.

The bearing holding member 3 may also be composed of an aluminum alloy such as ADC12 (JIS H5302). An aluminum alloy such as ADC12 can be processed by die-casting, and thus a degree of freedom in the shape is higher as compared to the case where the bearing holding member 3 is formed by extrusion molding or the like. Thus, the number of steps for forming the bearing holding member 3 can be reduced, and the manufacturing cost of the motor 1 can be reduced. An aluminum alloy such as ADC12 has higher thermal conductivity as compared to a general resin such as BMC or PBT.

The bearing holding member 3 is provided in the mold stator 4 so as to cover a side (more specifically, the counter-load side) of the rotor housing portion 41 in the radial direction. The rotor 2 including the bearings 12 and 13 is housed in the rotor housing portion 41.

The bearing holding member 3 has a flange portion 31 located on an outer side of the bearing 13 in the radial direction and a plate-shaped portion 32 located on an inner side of the flange portion 31 in the radial direction. The plate-shaped portion 32 protrudes from the flange portion 31 on a side in the axial direction, more specifically, on a side facing away from the stator 5.

On an inner circumferential side of the flange portion 31, a bearing facing portion 33 is formed to face an outer circumferential surface of the outer ring 13a of the bearing 13 in the radial direction. The bearing facing portion 33 has an inner circumferential surface having a cylindrical shape about the axis C1. The outer ring 13a of the bearing 13 is attached to an inner side of the bearing facing portion 33 by clearance fit.

On the stator 5 side of the plate-shaped portion 32, a bearing contact portion 34 is formed to contact an end surface of the outer ring 13a of the bearing 13 in the axial direction. The bearing contact portion 34 is a flat contact surface perpendicular to the axis C1 in this example.

A separation portion 35 is formed adjacent to and on an inner side of the bearing contact portion 34 in the radial direction. The separation portion 35 is distanced in the axial direction from the inner ring 13b of the bearing 13 and from an end surface of the rotation shaft 11. In other words, the bearing holding member 3 contacts the outer ring 13a of the bearing 13, but contacts neither the inner ring 13b of the bearing 13 nor the rotation shaft 11. This suppresses generation of a current passing through the rolling elements 13c of the bearing 13.

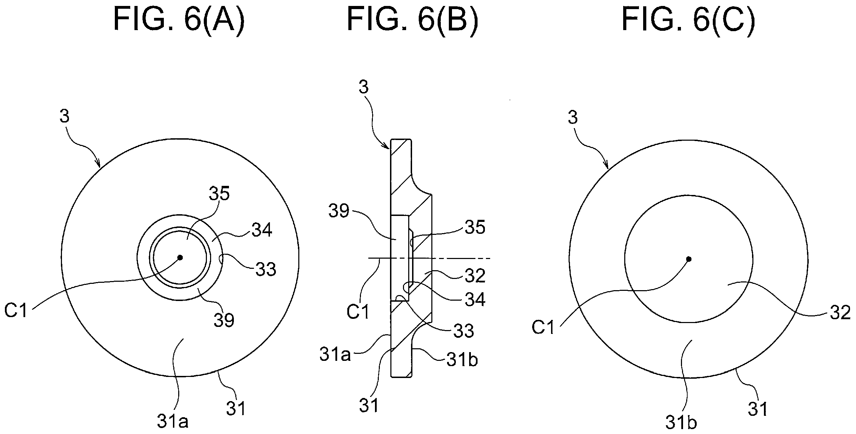

FIG. 6(A) is a front view of the bearing holding member 3 as viewed from the stator 5 side. FIG. 6(B) is a sectional view of the bearing holding member 3. FIG. 6(C) is a rear view of the bearing holding member 3 as viewed from a side opposite to the stator 5.

As illustrated in FIG. 6(A), the flange portion 31 of the bearing holding member 3 is formed in an annular shape about the axis C1. As illustrated in FIG. 6(B), the flange portion 31 has a first surface 31a on the stator 5 side and a second surface 31b on a side opposite to the first surface 31a.

The plate-shaped portion 32 is located at a center of the bearing holding member 3 in the radial direction and protrudes in the axial direction from the second surface 31b of the flange portion 31. As illustrated in FIG. 6(C), the plate-shaped portion 32 is formed in a disk shape about the axis C1.

As illustrated in FIG. 6(B), a hollow portion 39 that houses the bearing 13 (FIG. 5) is formed at a center of the bearing holding member 3 in the radial direction. An outer circumference of the hollow portion 39 is defined by the bearing facing portion 33. The bearing facing portion 33 of the flange portion 31 has an inner circumferential surface having a cylindrical shape about the axis C1, as described above.

The bearing contact portion 34 and the separation portion 35 described above are located on one end of the hollow portion 39 in the axial direction. The bearing contact portion 34 has a flat surface perpendicular to the axis C1 in this example, but the bearing contact portion 34 is not limited to such a shape. The bearing contact portion 34 may be any portion in contact with the end surface of the outer ring 13a (FIG. 5) of the bearing 13 in the axial direction.

The separation portion 35 has a flat surface perpendicular to the axis C1 in this example, but the separation portion 35 is not limited to such a shape. It is sufficient that the separation portion 35 is distanced in the axial direction from both of the inner ring 13b of the bearing 13 and the rotation shaft 11 (FIG. 5).

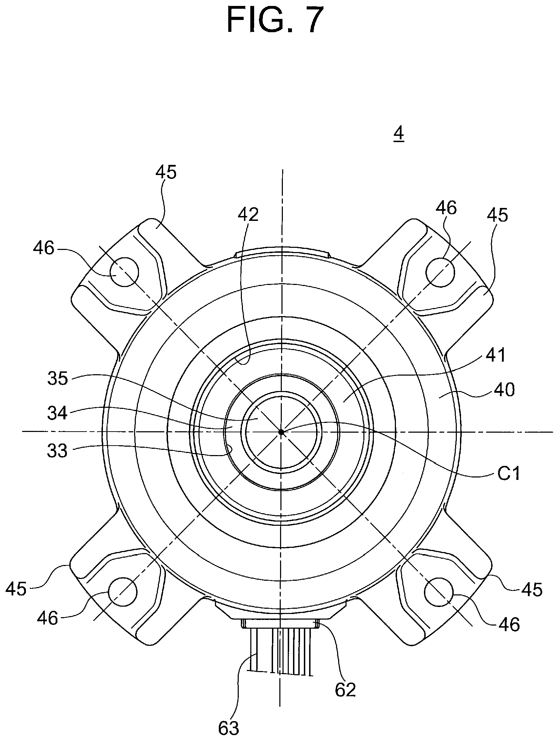

FIG. 7 is a diagram illustrating the mold stator 4 as viewed from the opening 42 side. When the mold stator 4 is viewed from the opening 42 side, the bearing facing portion 33, the bearing contact portion 34, and the separation portion 35 can be seen at the center of the rotor housing portion 41 in the radial direction.

The mounting legs 45 are formed at the outer circumference of the mold resin portion 40. In this example, four mounting legs 45 are formed at intervals of 90 degrees about the axis C1. However, the number of mounting legs 45 is not limited to four and only needs to be one or more. The mounting legs 45 are provided with holes 46 through which screws for fixing the motor 1 to a frame of an air conditioner or the like are inserted.

### (Manufacturing Method of Motor 1)

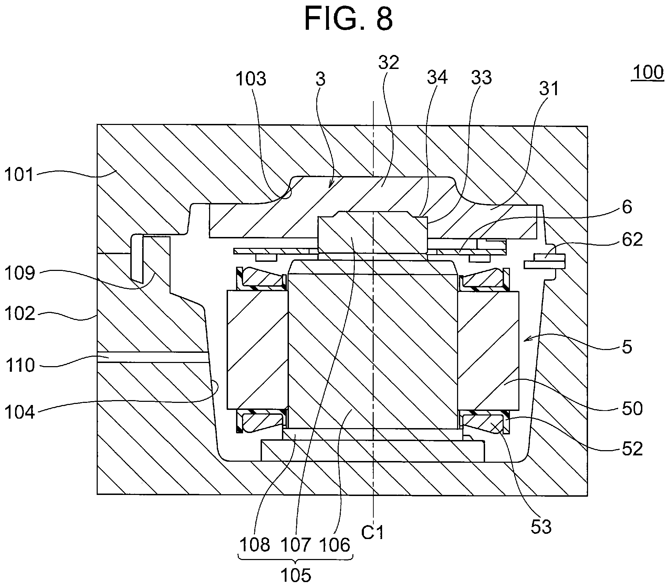

Next, a manufacturing method of the motor 1 will be described. FIG. 8 is a sectional view illustrating a mold 100 used in a manufacturing process of the motor 1. The mold 100 has an upper mold 101 and a lower mold 102 that can be opened and closed, and a cavity 104 is formed between the molds 101 and 102. The upper mold 101 is provided with a heat-dissipation-member housing portion 103 for housing the bearing holding member 3.

The lower mold 102 has a center core 105 in the cavity 104. The center core 105 protrudes in the axial direction from a bottom of the cavity 104. The center core 105 has a core shaped portion 106 having an outer shape corresponding to the rotor core 20 (FIG. 1) and a bearing shaped portion 107 having an outer shape corresponding to the bearing 13.

A larger-diameter portion 108 is formed at a lower end portion of the center core 105, and the larger-diameter portion 108 overhangs outward in the radial direction from the center core 105. The larger-diameter portion 108 is a portion corresponding to the opening 42 (FIG. 1) of the mold stator 4.

A gate 110 is formed in the lower mold 102. The gate 110 is a flow passage through which a resin is injected into the cavity 104. Pins 109 extending in the axial direction are formed on an outer circumferential portion of the cavity 104. The pins 109 are used to form the holes 46 of the mold resin portion 40.

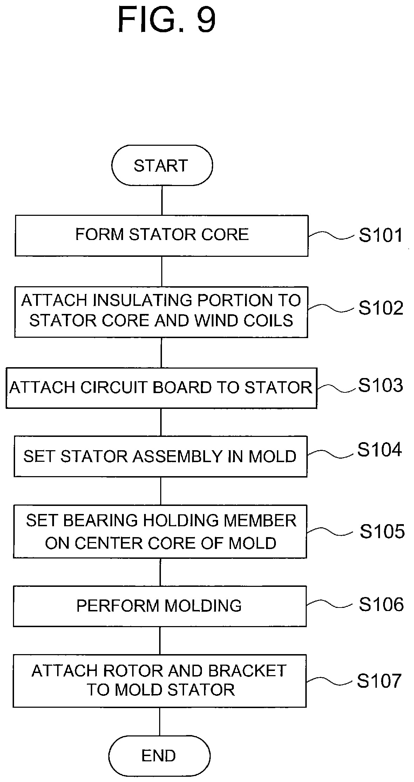

FIG. 9 is a flowchart illustrating the manufacturing process of the motor 1. In the manufacturing process of the motor 1, a plurality of stacking elements are stacked in the axial direction and integrally fixed by crimping or the like, thereby forming the stator core 50 (step S101).

Then, the insulating portion 52 is attached to or molded integrally with the stator core 50, and then the coils 53 are wound on the stator core 50 via the insulating portion 52 (step S102). In this way, the stator 5 is formed.

Subsequently, the circuit board 6 is attached to the stator 5 (step S103). At this time, the protrusions 56 (FIG. 4(B)) of the insulating portion 52 of the stator 5 are inserted through the attachment holes of the circuit board 6, and the tips of the protrusions 56 are thermally welded, so that the circuit board 6 is fixed to the stator 5. In this way, the stator assembly including the stator 5 and the circuit board 6 is completed.

Then, the upper mold 101 of the mold 100 is moved upward to open the cavity 104, and the stator assembly is set in the cavity 104 (step S104). The stator 5 is mounted around the center core 105 of the mold 100, as illustrated in FIG. 8.

Then, the bearing holding member 3 is set on the center core 105 of the mold 100 (step S105) . The bearing holding member 3 is supported by the bearing shaped portion 107 of the center core 105.

Then, the upper mold 101 is moved downward to close the cavity 104, and molding is performed (step S106). That is, the mold resin in a molten state is injected into the cavity 104 through the gate 110. The mold resin injected into the cavity 104 covers the stator 5 and the circuit board 6, and also covers the outer circumference side of the bearing holding member 3.

After the mold resin is injected into the cavity 104, the mold resin in the cavity 104 is cured by heating the mold 100, in a case where a thermosetting resin is used as the mold resin. In this way, the mold resin portion 40 is formed. That is, the mold stator 4 in which the stator 5 and the circuit board 6 are covered with the mold resin portion 40 is formed.

Aside from steps S101 to S106, the rotor 2 is formed. That is, a plurality of stacking elements are stacked in the axial direction and integrally fixed by crimping or the like, thereby forming the rotor core 20. Then, the magnets 23 are inserted into the magnet insertion holes 21. Furthermore, the rotation shaft 11, the rotor core 20, the magnets 23, and the sensor magnet 24 are integrally formed with a resin that forms the resin portion 25. Thereafter, the bearings 12 and 13 are attached to the rotation shaft 11, and the rotor 2 is formed.

Thereafter, the rotor 2 is inserted into the rotor housing portion 41 through the opening 42 of the mold stator 4, and the bracket 15 is fitted to the step portion 43 on the peripheral edge of the opening 42 (step S107). Thus, the bearing 13 is attached to the bearing holding member 3, and the bearing 12 is attached to the bracket 15. Further, the cap 14 is attached to the outside of the bracket 15. Consequently, the motor 1 is completed.

### (Functions)

As illustrated in FIG. 5, the bearing 13 is held by the bearing holding member 3, and the bearing holding member 3 and the stator 5 are integrally held by the mold resin portion 40. Thus, the coaxiality between the stator 5 and the rotor 2 can be improved by forming the bearing holding member 3 with high dimensional accuracy using the above-described aluminum alloy or the like. As a result, vibration and noise of the motor 1 can be reduced.

In particular, in the motor 1 having the consequent pole rotor 2, the first magnetic pole P1 as the magnet magnetic pole and the second magnetic pole P2 as the virtual magnetic pole have different inductances, and vibration and noise tend to increase due to the imbalance of inductance. In the first embodiment, the coaxiality between the stator 5 and the rotor 2 is improved, and thus it is possible to effectively reduce vibration and noise of the motor 1 having the consequent pole rotor 2.

The other bearing 12 is held by the metal bracket 15 (FIG. 1), and the bracket 15 is fitted to the step portion 43 of the mold resin portion 40. Since the bracket 15 and the bearing holding member 3 are integrally held by the mold resin portion 40 together with the stator 5, the coaxiality between the stator 5 and the rotor 2 can be further improved, and thus the effect of reducing vibration and noise of the motor 1 can be enhanced.

The bearing contact portion 34 of the bearing holding member 3 contacts the outer ring 13a of the bearing 13, but the separation portion 35 contacts neither the inner ring 13b of the bearing 13 nor the rotation shaft 11. Thus, the current passing through the rolling elements 13c of the bearing 13 can be suppressed. Therefore, it is possible to prevent damage, called electric corrosion, to surfaces of the rolling element 13c and raceway surfaces of the outer ring 13a and inner ring 13b.

Since the bearing holding member 3 is covered with the mold resin portion 40 together with the stator 5 and the circuit board 6, and a part of the bearing holding member 3 is exposed to the outside of the mold resin portion 40, heat generated by the coils 53 of the stator 5 and the circuit board 6 can be efficiently dissipated through the bearing holding member 3 to the outside.

### (Effects of Embodiment)

As described above, the motor 1 of the first embodiment includes the rotor 2, the stator 5, the bearing holding member 3 that holds the bearing 13 of the rotor 2, and the mold resin portion 40 as the resin portion that covers the bearing holding member 3 and the stator 5. Thus, the coaxiality between the stator 5 and the rotor 2 can be improved, and thereby vibration and noise of the motor 1 can be reduced.

Since the bearing holding member 3 has the bearing facing portion 33 that faces the bearing 13 in the radial direction, the bearing 13 can be held by the bearing facing portion 33.

Since the bearing facing portion 33 has a cylindrical surface, the bearing 13 can be attached to the bearing facing portion 33 by, for example, clearance fit, and thus the bearing 13 can be held in a stable state.

Since the bearing holding member 3 has the bearing contact portion 34 that contacts the bearing 13 in the axial direction, the bearing holding member 3 can be positioned in the axial direction by the contact between the bearing 13 and the bearing contact portion 34.

The bearing contact portion 34 of the bearing holding member 3 contacts the outer ring 13a of the bearing 13, but the separation portion 35 contacts neither the inner ring 13b of the bearing 13 nor the rotation shaft 11. Thus, the current passing through the rolling elements 13c of the bearing 13 can be suppressed, and the occurrence of electric corrosion can be suppressed.

In the case where the bearing holding member 3 is composed of a hot-dip zinc-aluminum-magnesium alloy-plated steel sheet, the bearing holding member 3 can be subjected to the press-working, and thus high dimensional accuracy can be easily obtained. In addition, the hot-dip zinc-aluminum-magnesium alloy-plated steel sheet has higher thermal conductivity than a general resin such as BMC or PBT, and thus heat dissipation property can be improved.

In the case where the bearing holding member 3 is composed of an aluminum alloy such as ADC12, the bearing holding member 3 can be processed by die-casting, and thus a degree of freedom in the shape is higher as compared to the case where the bearing holding member 3 is formed by extrusion molding or the like. Thus, the number of steps for forming the bearing holding member 3 can be reduced, and the manufacturing cost of the motor 1 can be reduced. In addition, since an aluminum alloy such as ADC12 has higher thermal conductivity than a general resin such as BMC or PBT, the heat dissipation property can be improved.

Since the mold resin portion 40 is composed of a thermosetting resin such as BMC, the mold resin portion 40 can be formed by low-pressure molding, and thus it is possible to suppress deformation of the circuit board 6 due to the molding pressure.

Since the magnet 23 of the rotor 2 is formed of a rare earth magnet that contains samarium, iron, and nitrogen, a large magnetic force can be obtained, and the output of the motor 1 can be improved. When the magnet 23 is formed of a rare earth magnet that contains neodymium, iron, and boron, a large magnetic force can be obtained as well, and the output of the motor 1 can be improved.

When the magnets 23 generate a large magnetic force, an exciting force in the radial direction acting between the rotor 2 and the stator 5 increases. However, since the coaxiality between the rotor 2 and the stator 5 is improved by the bearing holding member 3, vibration and noise due to the exciting force in the radial direction can be reduced.

### Modification

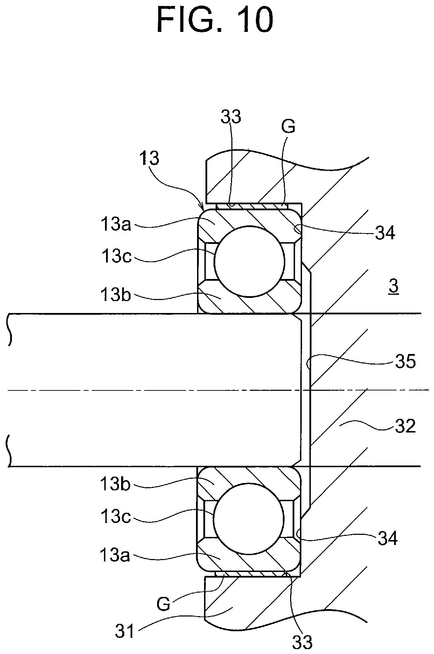

FIG. 10 is an enlarged diagram illustrating a part of a bearing holding member 3 of a modification of the first embodiment. In this modification, a grease G is provided in a gap between the bearing facing portion 33 of the bearing holding member 3 and the outer ring 13a of the bearing 13. As the grease G, a general grease for bearings can be used.

By the action of the grease G, the bearing 13 is smoothly inserted into the inside of the bearing facing portion 33 when the rotor 2 is mounted in the mold stator 4 (step S107 in FIG. 9) . In addition, the bearing 13 is applied with pressure from the bearing facing portion 33 via the grease G, and is held in a stable state inside the bearing facing portion 33. This can suppress the creep phenomenon in which the outer ring 13a of the bearing 13 rotates relative to the bearing holding member 3.

### Second Embodiment

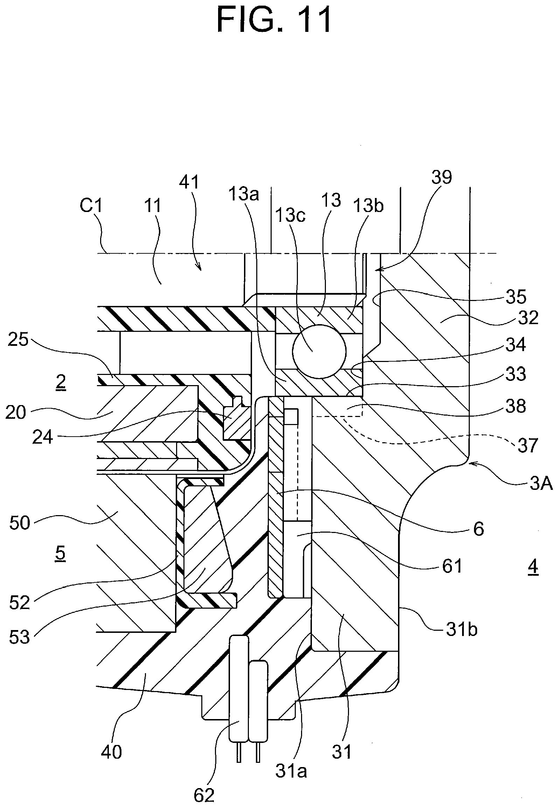

Next, a second embodiment will be described. FIG. 11 is an enlarged sectional view illustrating a part of a motor 1 of the second embodiment. The motor 1 of the second embodiment differs from the motor 1 of the first embodiment in the configuration of a bearing holding member 3A.

In the bearing holding member 3 of the first embodiment, the bearing facing portion 33 has the cylindrical surface (see FIG. 6(A)). In contrast, in the bearing holding member 3A of the second embodiment, the bearing facing portion 33 has a plurality of protrusions 38 that are arranged with spaces therebetween in the circumferential direction.

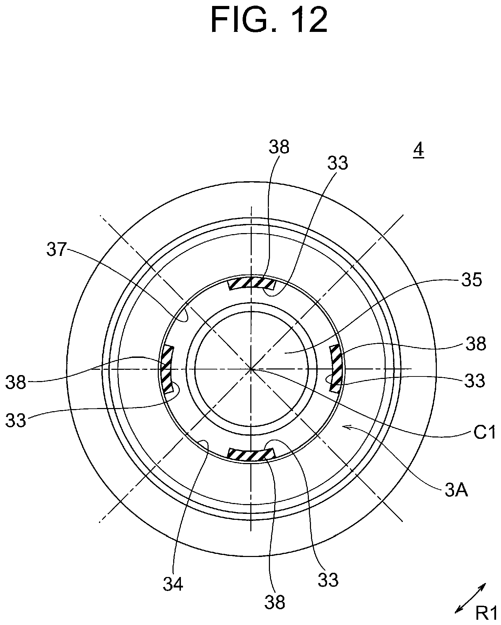

FIG. 12 is a diagram illustrating a mold stator 4 of the second embodiment as viewed from an opening 42 side. In FIG. 12, the mold resin portion 40 is not illustrated. The bearing holding member 3A has an inner circumferential surface 37 having a cylindrical shape. The inner circumferential surface 37 faces the bearing 13 with a space therebetween in the radial direction. The protrusions 38 are formed at a plurality of positions on the inner circumferential surface 37.

The protrusions 38 protrude inward in the radial direction from the inner circumferential surface 37, and inner end surfaces of the protrusions 38 in the radial direction face the bearing 13. The inner end surfaces of the protrusion 38 in the radial direction constitute parts of a cylindrical surface about the axis C1. The protrusions 38 are formed at equal intervals in the circumferential direction. Four protrusions 38 are formed at intervals of 90 degrees in the circumferential direction in this example. However, the number of protrusions 38 only needs to be two or more.

The protrusions 38 are integrally formed with other portions of the bearing holding member 3A using the same material. However, the protrusions 38 may be formed as separate members from other portions of the bearing holding member 3A and may be fixed thereto by adhesion or the like. The material of the bearing holding member 3A is the same as that of the bearing holding member 3 described in the first embodiment.

The motor of the second embodiment is configured in a similar manner to the motor 1 of the first embodiment except for the points described above.

In the second embodiment, the bearing holding member 3A faces the bearing 13 at the protrusions 38 arranged in the circumferential direction. Thus, the bearing 13 can be easily inserted into the bearing holding member 3A when the rotor 2 is mounted in the mold stator 4 (step S107 in FIG. 9). An area at which the protrusions 38 face the bearing 13 is small, and the pressure acting between the protrusions 38 and the bearing 13 is high, and thus the effect of suppressing creep can be enhanced.

In the second embodiment, the grease G may be provided between the bearing 13 and the protrusions 38, as described in the modification of the first embodiment.

### Third Embodiment

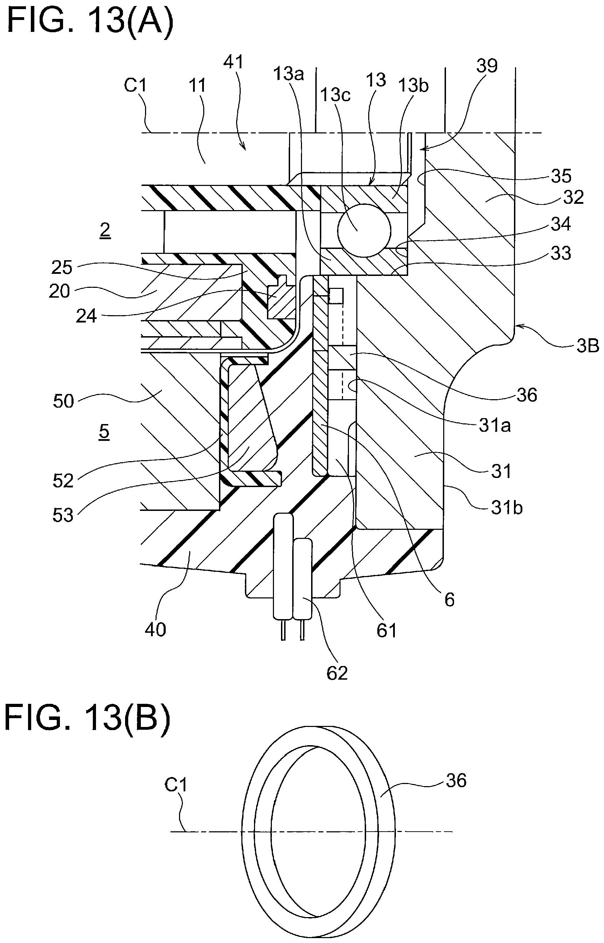

Next, a third embodiment will be described. FIG. 13(A) is an enlarged sectional view illustrating a part of a motor 1 of the third embodiment. The motor 1 of the third embodiment differs from the motor 1 of the first embodiment in the configuration of a bearing holding member 3B.

The bearing holding member 3B of the third embodiment has a contact portion 36 on the first surface 31a of the flange portion 31, and the contact portion 36 contacts the circuit board 6. The contact portion 36 is integrally formed with other portions of the bearing holding member 3B using the same material. However, the contact portion 36 may be formed as a separate member from other portions of the bearing holding member 3B and may be fixed thereto by adhesion or the like. The material of the bearing holding member 3B is the same as that of the bearing holding member 3 described in the first embodiment.

The contact portion 36 is formed in an annular shape about the axis C1 as illustrated in FIG. 13(B), on the first surface 31a of the flange portion 31. The shape, number, and position of the contact portion(s) 36 are not limited as long as the contact portion 36 contacts the circuit board 6.

In this example, the contact portion 36 contacts the circuit board 6. However, it is sufficient that the contact portion 36 contacts a part of the stator assembly including the stator 5 and the circuit board 6. For example, the contact portion 36 may contact the insulating portion 52 of the stator 5.

The motor of the third embodiment is configured in a similar manner to the motor 1 of the first embodiment except for the points described above.

In the third embodiment, since the contact portion 36 of the bearing holding member 3B contacts a part of the stator assembly, the bearing holding member 3B can be positioned in the axial direction with high accuracy. Thus, the quality of the motor 1 can be improved.

Further, since the contact portion 36 of the bearing holding member 3B contacts the circuit board 6, heat generated by electronic components of the circuit board 6 can be transferred to the bearing holding member 3B, and can be efficiently dissipated to the outside of the motor 1.

In the third embodiment, the grease G may be provided around the bearing 13, as described in the modification of the first embodiment. The bearing facing portion 33 may be constituted by a plurality of protrusions 38, as described in the second embodiment.

### Fourth Embodiment

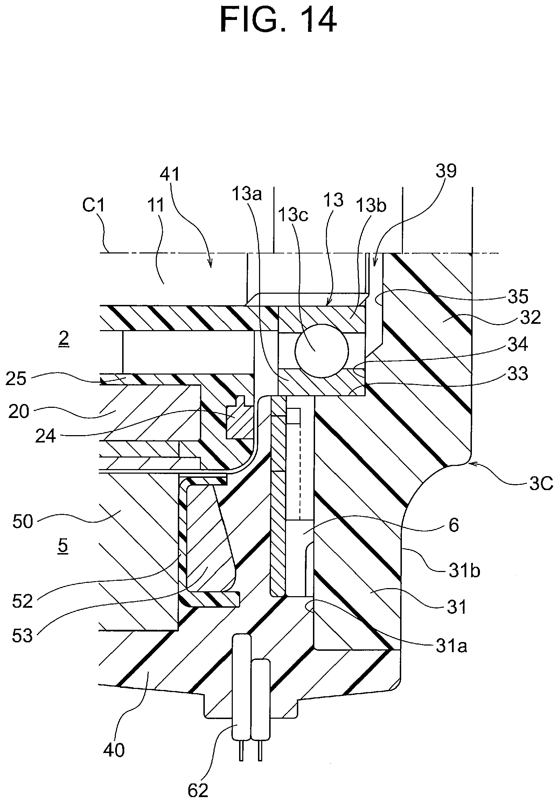

Next, a fourth embodiment will be described. FIG. 14 is an enlarged sectional view illustrating a part of a motor 1 of the fourth embodiment. The motor 1 of the fourth embodiment differs from the motor 1 of the first embodiment in the configuration of a bearing holding member 3C.

The bearing holding member 3 of the first embodiment is composed of a metal. In contrast, the bearing holding member 3C of the fourth embodiment is composed of a resin.

The bearing holding member 3C is composed of a thermoplastic resin such as polyphenylene sulfide (PPS). Since a thermoplastic resin can be subjected to injection molding, high dimensional accuracy can be obtained more easily than metal or ceramics, and the manufacturing cost can be reduced. By forming the bearing holding member 3C using a thermoplastic resin having high thermal conductivity such as PPS, heat dissipation property can be improved.

The bearing holding member 3C may be formed of a thermosetting resin such as BMC, for example. By forming the bearing holding member 3C using the same type of material as that of the mold resin portion 40, the occurrence of cracking due to a difference in linear expansion coefficient between the bearing holding member 3C and the mold resin portion 40 can be suppressed, and the resistance to heat shock can be improved. Furthermore, by forming the bearing holding member 3C using a thermosetting resin having high thermal conductivity such as BMC, heat dissipation property can be improved.

In this case, the bearing holding member 3C is desirably composed of a resin that has a higher strength than the mold resin portion 40. BMC, which forms the mold resin portion 40, contains unsaturated polyester as a main component and a reinforcing material such as glass fibers added thereto. The bearing holding member 3C is desirably formed of BMC in which the adding amount of the reinforcing material is larger than that of BMC forming the mold resin portion 40, for example. The shape of the bearing holding member 3C is the same as that of the bearing holding member 3 of the first embodiment.

The motor of the fourth embodiment is configured in a similar manner to the motor 1 of the first embodiment except for the points described above.

In the fourth embodiment, by forming the bearing holding member 3C using a thermoplastic resin, the manufacturing cost of the motor can be reduced. Alternatively, by forming the bearing holding member 3C using a thermosetting resin, the resistance to heat shock can be enhanced. In addition, by using thermoplastic or thermosetting resin having high thermal conductivity, heat dissipation property can be enhanced.

In the fourth embodiment, the grease G may be provided around the bearing 13, as described in the modification of the first embodiment. The bearing facing portion 33 may be constituted by a plurality of protrusions 38, as described in the second embodiment. The bearing holding member 3C may be provided with the contact portion 36 in contact with the stator assembly, as described in the third embodiment.

### Fifth Embodiment

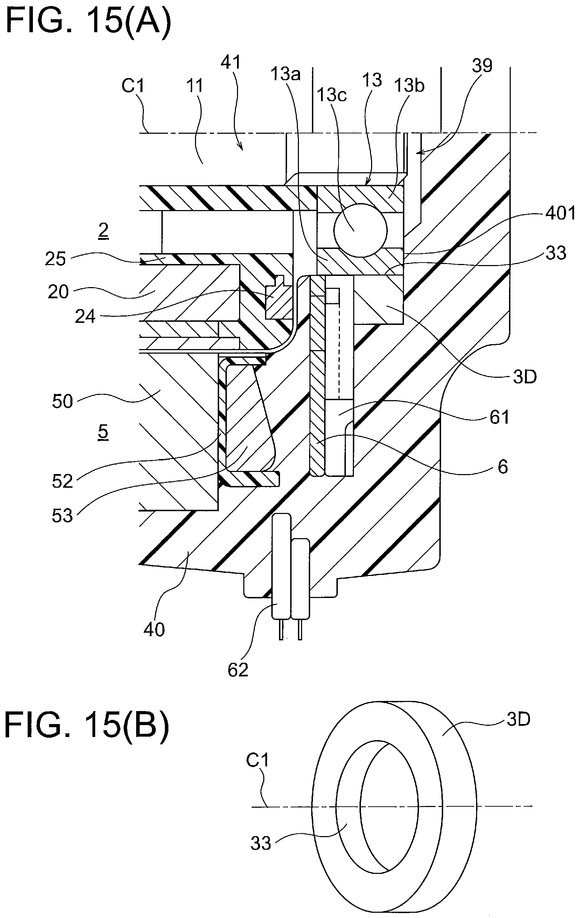

Next, a fifth embodiment will be described. FIG. 15(A) is an enlarged sectional view illustrating a part of a motor 1 of the fifth embodiment. The motor 1 of the fifth embodiment differs from the motor 1 of the first embodiment in the configuration of a bearing holding member 3D.

FIG. 15(B) is a perspective view illustrating the bearing holding member 3D of the fifth embodiment. The bearing holding member 3D is a member that has an annular shape about the axis C1. The sectional shape of the bearing holding member 3D is, for example, a quadrilateral, but is not limited thereto. An inner circumferential surface of the bearing holding member 3D constitutes a bearing facing portion 33 that faces the outer ring 13a of the bearing 13 in the radial direction.

As shown in FIG. 15(A), the mold resin portion 40 of the fifth embodiment covers the bearing holding member 3D from outside in the radial direction and also covers the counter-load side of the rotor housing portion 41. The mold resin portion 40 has a bearing contact portion 401 that contacts the end surface of the outer ring 13a of the bearing 13 in the axial direction.

The bearing holding member 3D is composed of a metal such as a hot-dip zinc-aluminum-magnesium alloy-plated steel sheet or an aluminum alloy, as is the case with the bearing holding member 3 of the first embodiment. However, the bearing holding member 3D may be composed of a thermoplastic resin or a thermosetting resin, as is the case with the bearing holding member 3C of the fourth embodiment.

The motor of the fifth embodiment is configured in a similar manner to the motor 1 of the first embodiment except for the points described above.

In the fifth embodiment, the bearing holding member 3D is an annular member, and thus it is easy to manufacture the bearing holding member 3D. Thus, the coaxiality between the rotor 2 and the stator 5 can be enhanced, and vibration and noise can be reduced while reducing the manufacturing cost.

In the fifth embodiment, the grease G may be provided around the bearing 13, as described in the modification of the first embodiment. The bearing facing portion 33 may be constituted by a plurality of protrusions 38, as described in the second embodiment. The bearing holding member 3D may be provided with the contact portion 36 in contact with the stator assembly, as described in the third embodiment.

### (Modification of Rotor)

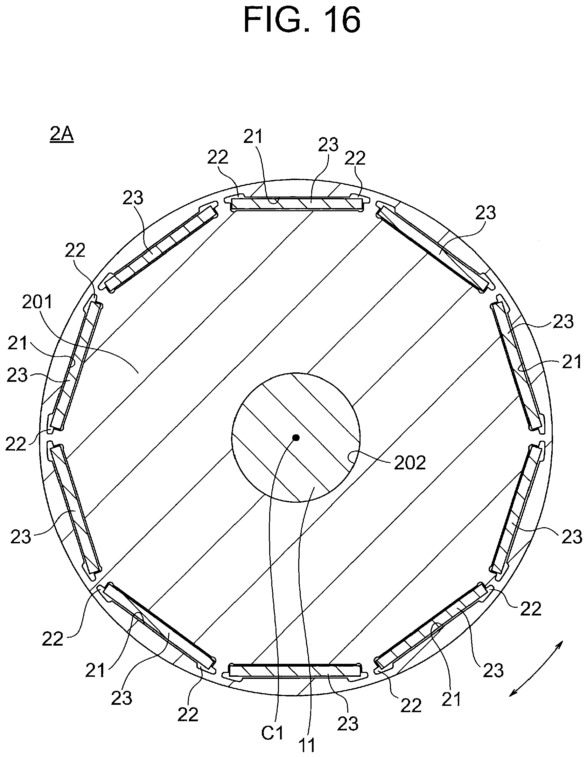

Next, a rotor of a modification that is applicable to each embodiment will be described. FIG. 16 is a sectional view illustrating a rotor 2A of the modification. The above-described rotor 2 of the first embodiment is of a consequent-pole type having the magnet magnetic poles and the virtual magnetic poles. In contrast, the rotor 2A of the modification is a non-consequent-pole type in which all the magnetic poles are constituted by magnet magnetic poles.

The rotor 2A has a rotor core 201 centered on the axis C1. The rotor core 201 is formed of a plurality of stacking elements that are stacked in the axial direction and integrally fixed by crimping, welding, bonding, or the like. The stacking elements are, for example, electromagnetic steel sheets. Each stacking element has a thickness of 0.1 mm to 0.7 mm. The rotor core 201 has a central hole 202 at its center in the radial direction. The rotation shaft 11 is fixed to the central hole 202.

A plurality of magnet insertion holes 21 are formed along an outer circumference of the rotor core 20. The magnet insertion holes 21 are arranged at equal intervals in the circumferential direction. The shape of each magnet insertion hole 21 is as described in the first embodiment. Openings 22 are formed on both sides of the magnet insertion hole 21 in the circumferential direction. The number of magnet insertion holes 21 is 10 in this example, but is not limited to 10.

The magnet 23 is inserted in each magnet insertion hole 21. The magnet 23 is in the form of a flat plate, and has a rectangular shape in a cross section perpendicular to the axial direction. The material and shape of the magnet 23 are as described in the first embodiment.

The magnets 23 adjacent to each other in the circumferential direction are arranged so that the opposite magnetic poles face the outer circumferential side of the rotor core 201. Thus, all the magnetic poles of the rotor 2 are constituted by the magnets 23. In this example, the rotor 2A has 10 magnets 23, and the number of magnetic poles of the rotor 2A is 10.

The non-consequent pole rotor 2A has a larger number of magnets 23 than the consequent pole rotor 2, but has the advantage of being less likely to cause vibration and noise.

The motor of the modification is configured in a similar manner to the motor 1 of the first embodiment except that the rotor 2A is of the non-consequent-pole type. The non-consequent pole rotor 2A of the modification may be applied to the motors of the second to fifth embodiments.

Even in the motor 1 having the non-consecutive-pole rotor 2A, the coaxiality between the rotor 2A and the stator 5 can be improved by the provision of the bearing holding member 3 of each embodiment. Thus, vibration and noise can be reduced.

### (Air Conditioner)

Next, an air conditioner to which the motor 1 of each of the above-described embodiments and modifications is applicable will be described. FIG. 17(A) is a diagram illustrating a configuration of an air conditioner 500 to which the motor 1 of the first embodiment is applied. The air conditioner 500 includes an outdoor unit 501, an indoor unit 502, and a refrigerant pipe 503 connecting the units 501 and 502.

The outdoor unit 501 includes an outdoor fan 510 which is, for example, a propeller fan. The indoor unit 502 includes an indoor fan 520 which is, for example, a cross flow fan. The outdoor fan 510 has the impeller 505 and a motor 1A that drives the impeller 505. The indoor fan 520 includes an impeller 521 and a motor 1B that drives the impeller 521. Each of the motors 1A and 1B is constituted by the motor 1 described in the first embodiment. A compressor 504 that compresses a refrigerant is also illustrated in FIG. 17(A).

FIG. 17(B) is a sectional view of the outdoor unit 501. The motor 1A is supported by a frame 509 disposed in a housing 508 of the outdoor unit 501. The impeller 505 is attached to the rotation shaft 11 of the motor 1 via a hub 506.

In the outdoor fan 510, the impeller 505 rotates by the rotation of the rotor 2 of the motor 1A to blow air to the outside of a room. During a cooling operation of the air conditioner 500, heat is released when the refrigerant compressed by the compressor 504 is condensed in a condenser, and the heat is released to the outside of the room by the air blown by the outdoor fan 510.

Similarly, in the indoor fan 520 (FIG. 17(A)), the impeller 521 rotates by the rotation of the rotor 2 of the motor 1B to blow air to the inside of the room. During the cooling operation of the air conditioner 500, the refrigerant takes heat from the air when the refrigerant evaporates in an evaporator, and the air is blown into the room by the indoor fan 520.

In the motor 1 of the first embodiment described above, vibration and noise are reduced. Thus, the quietness of the air conditioner 500 can be improved by constituting the motors 1A and 1B using the motor 1 of the first embodiment.

Each of the motors 1A and 1B is constituted by the motor 1 of the first embodiment, but it is sufficient that at least one of the motors 1A and 1B is constituted by the motor 1 of the first embodiment. Further, any of the motors of the second to fifth embodiments may be used as the motor 1A, the motor 1B or both.

The motor 1 described in each embodiment can be mounted on any electric apparatuses other than the fan of the air conditioner.

Although the desirable embodiments of the present invention have been specifically described above, the present invention is not limited to the above-described embodiments, and various modifications or changes can be made to those embodiments without departing from the scope of the present invention.

### DESCRIPTION OF REFERENCE CHARACTERS

1, 1a, 1b motor; 2, 2a rotor; 3 bearing holding member; 4 mold stator; 5 stator; 6 circuit board; 11 rotation shaft; 12, 13 bearing; 14 cap; 15 bracket; 20 rotor core; 21 magnet insertion hole; 23 magnet; 25 resin portion; 31 flange portion; 32 plate-shaped portion; 33 bearing facing surface; 34 bearing contact portion; 35 separation portion; 36 contact portion; 37 cylindrical surface; 38 protrusion; 39 hollow portion; 40 mold resin portion; 41 rotor housing portion; 42 opening; 50 stator core; 51 core portion; 51a yoke; 51b tooth; 51d split surface portion; 51e thin-walled connection portion; 52 insulation portion; 53 coil; 61 drive circuit; 100 mold; 101 upper mold; 102 lower mold; 103 heat-dissipation-member housing portion; 104 cavity; 110 gate; 201 rotor core; 202 central hole; 500 air conditioner; 501 outdoor unit; 502 indoor unit; 503 refrigerant pipe; 504 compressor; 505 impeller; 510 outdoor fan; 520 indoor fan; 521 impeller.

## Claims

1. A motor comprising:
a rotor having a rotation shaft, a rotor core fixed with respect to the rotation shaft, a magnet attached to the rotor core, and a bearing attached to the rotation shaft, the magnet constituting a first magnetic pole and a part of the rotor core constituting a second magnetic pole;
an annular stator surrounding the rotor from outside in a radial direction about a center axis of the rotation shaft;
a bearing holding member holding the bearing; and
a resin portion covering the stator and the bearing holding member.

2. The motor according to claim 1, wherein the bearing holding member has a bearing facing portion that faces the bearing in the radial direction.

3. The motor according to claim 2, wherein a grease is provided between the bearing and the bearing facing portion.

4. The motor according to claim 2 or 3, wherein the bearing facing portion has a facing surface having a cylindrical shape and extending in a circumferential direction about the center axis.

5. The motor according to any one of claims 2 to 4, wherein the bearing holding member has a plurality of bearing facing portions including said bearing facing portion.

6. The motor according to claim 5, wherein the plurality of bearing facing portions are arranged at equal intervals in a circumferential direction about the center axis of the rotation shaft.

7. The motor according to claim 5 or 6, wherein the bearing holding member has a cylindrical surface surrounding the bearing from outside in the radial direction, and
wherein the plurality of bearing facing portions protrudes from the cylindrical surface toward the bearing.

8. The motor according to any one of claims 1 to 7, wherein a stator assembly is constituted by the stator and a circuit board attached to the stator, and
wherein the bearing holding member has a contact portion contacting the stator assembly.

9. The motor according to claim 8, wherein the contact portion contacts the circuit board.

10. The motor according to any one of claims 1 to 9, wherein the bearing holding member has a bearing contact portion contacting the bearing in an axial direction of the rotation shaft.

11. The motor according to claim 10, wherein the bearing contact portion contacts an outer ring of the bearing, and
wherein the bearing holding member has a separation portion on an inner side of the bearing contact portion in the radial direction, the separation portion being separated from both of an inner ring of the bearing and the rotation shaft.

12. The motor according to any one of claims 1 to 10, wherein the bearing holding member is an annular member surrounding the bearing from outside in the radial direction.

13. The motor according to any one of claims 1 to 12, wherein the bearing holding member is composed of a metal.

14. The motor according to claim 13, wherein the bearing holding member is composed of a hot-dip zinc-aluminum-magnesium alloy-plated steel sheet.

15. The motor according to claim 13, wherein the bearing holding member is composed of an aluminum alloy.

16. The motor according to any one of claims 1 to 12, wherein the bearing holding member is composed of a resin.

17. The motor according to claim 16, wherein the bearing holding member is composed of a thermoplastic resin.

18. The motor according to claim 16, wherein the bearing holding member is composed of a thermosetting resin.

19. The motor according to any one of claims 1 to 18, wherein the resin portion is composed of a thermosetting resin.

20. The motor according to any one of claims 1 to 19, wherein the magnet is composed of a rare earth magnet containing samarium, iron, and nitrogen.

21. The motor according to any one of claims 1 to 19, wherein the magnet is composed of a rare earth magnet containing neodymium, iron, and boron.

22. A fan comprising:
the motor according to any one of claims 1 to 21; and
an impeller driven to rotate by the motor.

23. An air conditioner comprising:
an outdoor unit; and
an indoor unit connected with the outdoor unit via a refrigerant pipe,
wherein at least one of the outdoor unit and the indoor unit has the fan according to claim 22.

24. A manufacturing method of the motor, the method comprising steps of:
preparing an annular stator;
integrally molding the stator and a bearing holding member with a resin; and
inserting a rotor having a rotation shaft, into an inner side of the stator in a radial direction about a center axis of the rotation shaft,
wherein the rotor has a rotor core fixed with respect to the rotation shaft, a magnet attached to the rotor core, and a bearing attached to the rotation shaft,
wherein the magnet constitutes a first magnetic pole and a part of the rotor core constitutes a second magnetic pole, and
wherein in the inserting step of the rotor, the bearing is inserted into an inner side of the bearing holding member in the radial direction.
